Europäisches Patentamt

European Patent Office

Office européen des brevets

(19)

(11) EP 1 589 764 A2

(12) **EUROPEAN PATENT APPLICATION**

(43) Date of publication:
26.10.2005 Bulletin 2005/43

(51) Int Cl.$^7$: **H04N 7/26**

(21) Application number: 05252254.7

(22) Date of filing: 11.04.2005

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **13.04.2004 KR 2004025417**

(71) Applicant: **SAMSUNG ELECTRONICS CO., LTD.**
**Suwon-si, Gyeonggi-do (KR)**

(72) Inventors:
• **Lee, Bae-keun**
**Bucheon-si Gyeonggi-do (KR)**
• **Cha, Sang-chang, 103-1503 Raemian 1cha Apt.**
**Hwanseong-si Gyeonggi-do (KR)**
• **Ha, Ho-jin**
**Seoul (KR)**
• **Han, Woo-jin, 108-703 Jugong 2-danji Apt.**
**Suwon-si Gyeonggi-do (KR)**

(74) Representative: **Brandon, Paul Laurence et al**
**APPLEYARD LEES,**
**15 Clare Road**
**Halifax HX1 2HY (GB)**

(54) **Method and apparatus for supporting motion scalability**

(57) A method and apparatus for supporting scalability for motion vectors in scalable video coding are provided. The motion estimation apparatus (120) includes a motion estimation module (121) searching for a variable block size and a motion vector that minimize a cost function for each layer according to predetermined pixel accuracy, a sampling module upsampling an original frame when the pixel accuracy is less than a pixel size, and before searching for a motion vector in a layer having a lower resolution than the original frame downsampling the original frame into the low resolution, a motion residual module calculating a residual between motion vectors found in the respective layers, and a rearrangement module rearranging the residuals between the found motion vectors and the found variable block size information using significance obtained from a searched lower layer. Accordingly, true motion scalability can be achieved to improve adaptability to changing network circumstances.

**FIG. 5**

EP 1 589 764 A2

## Description

Apparatuses and methods consistent with the present invention relate to video compression, and more particularly, to providing scalability of motion vectors in video coding.

With the development of information communication technology including the Internet, video communication as well as text and voice communication has explosively increased. Conventional text communication cannot satisfy users' various demands, and thus multimedia services that can provide various types of information such as text, pictures, and music have increased. Multimedia data requires a large capacity of storage media and a wide bandwidth for transmission since the amount of multimedia data is usually large. Accordingly, a compression coding method is requisite for transmitting multimedia data including text, video, and audio.

A basic principle of data compression is removing data redundancy. Data can be compressed by removing spatial redundancy in which the same color or object is repeated in an image, temporal redundancy in which there is little change between adjacent frames in a moving image or the same sound is repeated in audio, or mental visual redundancy taking into account human eyesight and limited perception of high frequency. Currently, most of video coding standards are based on motion compensation/estimation coding. The temporal redundancy is removed using temporal filtering based on motion compensation, and the spatial redundancy is removed using spatial transform.

A transmission medium is required to transmit multimedia generated after removing the data redundancy. Transmission performance is different depending on transmission media. Currently used transmission media have various transmission rates. For example, an ultrahigh speed communication network can transmit data of several tens of megabits per second while a mobile communication network has a transmission rate of 384 kilobits per second.

To support transmission media having various speeds or to transmit multimedia at a rate suitable to a transmission environment, data coding methods having scalability may be suitable to a multimedia environment.

Scalability indicates a characteristic enabling a decoder or a pre-decoder to partially decode a single compressed bitstream according to conditions such as a bit rate, an error rate, and system resources. A decoder or a pre-decoder can reconstruct a multimedia sequence having different picture quality, resolutions, or frame rates using only a portion of a bitstream that has been coded according to a method having scalability.

Moving Picture Experts Group-21 (MPEG-21) Part 13 provides for the standardization of scalable video coding. A wavelet-based spatial transform method is considered as the strongest candidate for the standard scalable video coding. Furthermore, a technique disclosed in U.S. Publication No. 2003/0202599 A1 is receiving increased attention as a coding method for supporting temporal scalability. While not using wavelet-based compression, MPEG4 or H.264 also provides spatial and temporal scalabilities using multiple layers.

While much effort was conventionally devoted to support video quality, spatial, and temporal scalabilities, little research has been made on providing scalability for motion vectors that are also an important factor for efficient compression of data.

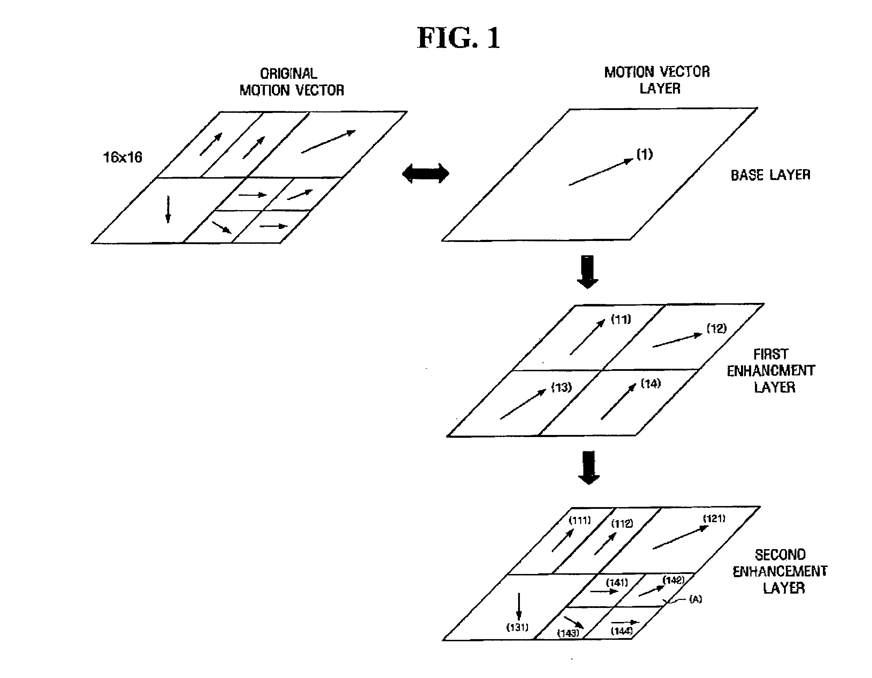

In recent years, research has been commenced into a technique for supporting scalability for motion vectors. FIG. 1 shows an example of a motion vector consisting of multiple layers. In video transmission at a low bit rate, video quality will be improved by saving bits for information such as motion vector, variable size and position of a block for motion estimation, and motion vector determined for each variable size block (hereinafter collectively called "motion information") and allocating these bits to texture information. Thus, transmission of motion information divided into layers after motion estimation is desirable.

Variable block size motion prediction is performed for each macroblock with size of 16×16 that consists of combinations of 16×16, 16×8, 8×16, 8×8, 8×4, 4×8, and 4×4 subblocks. Each subblock is assigned a motion vector with quarter pixel accuracy. A motion vector is decomposed into layers according to the following steps:

First, a motion vector search is performed on a 16×16 block size at one pixel accuracy. The searched motion vector represents a motion vector base layer. For example, FIG. 1 shows a motion vector 1 for a macroblock in the base layer.

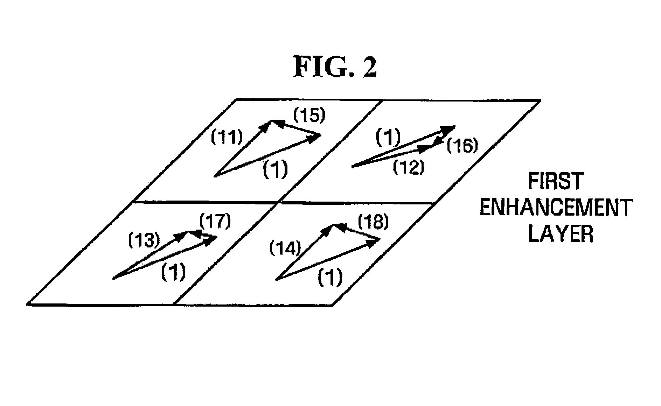

Second, a motion vector search is performed on 16×16 and 8×8 block sizes at half pixel accuracy. A difference between the searched motion vector and the motion vector of the base layer is a motion vector residual for a first enhancement layer that is then transmitted to a decoder terminal. Residual vectors 11 through 14 arc calculated for variable block sizes determined by the first enhancement layer. However, a residual between each of the residual vectors 11 through 14 and the base layer motion vector 1 is actually transmitted to the decoder terminal. The motion vector residuals for the first enhancement layer respectively correspond to residual vectors 15 through 18 shown in FIG. 2.

Third, a motion vector search is performed on all subblock sizes at quarter pixel accuracy. A difference between the searched motion vector and the sum of the base layer motion vector 1 and each of the motion vector residuals for the first enhancement layer is a motion vector residual for a second enhancement layer that is then transmitted to the decoder terminal. For example, a motion vector residual for a macroblock A is obtained by subtracting a residual vector 14, i.e., the sum of the residual vector 18 and the motion vector 1, from the residual vector 142.

Lastly, motion information for the three layers is encoded separately.

Referring to FIG. 1, an original motion vector is divided into three layers: the base layer and the first and second enhancement layers. As each frame having motion information in temporal decomposition is divided into one base layer and a few enhancement layers as described above, the entire motion vector information is organized into groups as shown in FIG. 1. The base layer consists of essential motion vector information, having the highest priority that cannot be omitted during transmission.

Thus, a bit rate in the base layer must be equal to or smaller than the minimum bandwidth supported by a network while a bit rate in transmission of the base layer and the enhancement layers must be equal to or smaller than the maximum bandwidth.

To cover a wide range of spatial resolutions and bit rates, the above method makes it possible to support scalabilities for motion information by determining vector accuracy according to spatial resolution.

For a bitstream compressed at a low bit rate, degradation in video quality can often occur since more bits arc allocated to motion vectors and fewer bits are allocated to texture information. To solve this problem, a bitstream can be organized into base layer and enhancement layers according to motion accuracy as shown in FIG. 1.

However, when the amount of motion vector information is too small to be decoded as a base layer and is too large to be decoded as an enhancement layer, the layering method makes it impossible to determine the optimal amount of motion vector information and achieve true motion vector scalability. Thus, the layering approach cannot adjust the amount of motion vector information according to changing network circumstances.

That is, while the above method can achieve scalability for each layer, the performance is degraded when a portion of the motion information is truncated at any position within a single layer. Since motion information is arranged within a layer regardless of the relative significance, truncating at any point may result in loss of important motion information.

Preferred embodiments of the present invention aim to provide a method and apparatus for adaptively implementing scalability for motion vectors within a layer by improving motion scalability supported for each layer.

Preferred embodiments of the present invention also aim to provide a method and apparatus for rearranging motion vectors according to significance in order to support scalability for motion vectors within a layer.

Preferred embodiments of the present invention also aim to provide a method and apparatus for rearranging motion vectors using only information from lower layers without the need for additional information.

According to an aspect of the present invention, there is provided a motion estimation apparatus including a motion estimation module searching for a variable block size and a motion vector that minimize a cost function J for each layer according to predetermined pixel accuracy, a sampling module upsampling an original frame when the pixel accuracy is less than a pixel size, and before searching for a motion vector in a layer having a lower resolution than the original frame downsampling the original frame into the low resolution, a motion residual module calculating a residual between motion vectors found in the respective layers, and a rearrangement module rearranging the residuals between the found motion vectors and the found variable block size information using significance obtained from a searched lower layer.

According to another aspect of the present invention, there is provided a video encoder comprising a motion information generation module performing motion estimation on frames in a group of pictures (GOP) in order to determine motion vectors and rearranging the motion vectors according to their significance, a temporal filtering module reducing temporal redundancies by decomposing frames into low-pass and high-pass frames in direction of a temporal axis using the motion vectors, a spatial transform module removing spatial redundancies from the frames from which the temporal redundancies have been removed by the temporal filtering module and creating transform coefficients, and a quantization module quantizing the transform coefficients.

According to still another aspect of the present invention, there is provided a video decoder comprising an entropy decoding module interpreting a bitstream and extracting texture information and motion information from the bitstream, a motion information reconstruction module finding significance using motion information from a lower layer among the motion information and reversely arranging motion vectors for the current layer in the original order by referencing the significance, an inverse spatial transform module performing an inverse spatial transform in order to inversely transform coefficients contained in the texture information into transform coefficients in a spatial domain, and an inverse temporal filtering module performing inverse temporal filtering on the transform coefficients in the spatial domain using the reversely arranged motion vectors and reconstructing frames making up a video sequence.

According to a further aspect of the present invention, there is provided a motion estimation method comprising obtaining a variable block size and a motion vector for a base layer from an original frame, obtaining a motion vector for a first enhancement layer, calculating a residual between the motion vector for the base layer and the motion vector for the first enhancement layer, and rearranging the motion vector residuals in order of significance of the motion vectors.

According to yet another aspect of the present invention, there is provided a motion estimation method comprising performing first downsampling of an original frame to a resolution of a base layer, performing a search on a frame obtained with the first downsampling to find a variable block size and a motion vector for the base layer, performing second downsampling of an original frame to be a resolution of a first enhancement layer, performing a search on a. frame obtained with the second downsampling to find a variable block size and a motion vector for the first enhancement layer, scaling the motion vector found in the base layer by a scale factor correspouding to a multiple of the resolution of the first enhancement layer to that of the base layer in order to make the scales of the motion vectors in the base layer and the first enhancement layer equal, calculating a residual between the motion vector for the first enhancement and the scaled motion vector for the base layer, and rearranging the residuals in order of significance obtained from motion information contained in the base layer.

According to a still another aspect of the present invention, there is provided a video encoding method comprising performing motion estimation on frames in a. group of pictures (GOP) in order to determine motion vectors and rearranging the motion vectors, reducing temporal redundancies from the frames using the motion vectors, removing spatial redundancies from the frames from which the temporal redundancies have been removed, and quantizing transform coefficients created by removing the spatial redundancies and the rearranged motion vectors.

According to a further aspect of the present invention, there is provided a video decoding method comprising interpreting an input bitstream and extracting texture information and motion information from the bitstream, reversely arranging motion vectors contained in the motion information in the original order, and performing inverse spatial transform on transform coefficients contained in the texture information and performing inverse temporal filtering on the obtained transform coefficients using the motion vectors.

Further features of the present invention are set out in the appended claims.

The present invention will become more apparent by describing in detail exemplary embodiments thereof with reference to the attached drawings in which:

FIG. 1 illustrates the concept of calculating a multi-layered motion vector;
FIG. 2 shows an example of the first enhancement layer shown in FIG. 1;
FIG. 3 shows the overall structure of a video/image coding system;
FIG. 4A is a block diagram of an encoder according to an exemplary embodiment of the present invention;
FIG. 4B is a block diagram of the motion information generation module 120 shown in FIG. 4A;
FIG. 5 is a diagram for explaining a method for implementing scalability for motion vector within a layer according to a first exemplary embodiment of the present invention;
FIG. 6A shows an example of a macroblock divided into sub-macroblocks;
FIG. 6B shows an example of a sub-macroblock that is further split into smaller blocks;
FIG. 7 illustrates an interpolation process for motion vector search with eighth pixel accuracy;
FIG. 8 shows an example of a process for obtaining significance information from a base layer;
FIG. 9 is a diagram for explaining a method for implementing scalability for motion vector within a layer according to a second exemplary embodiment of the present invention;
FIG. 10 shows another example of a process for obtaining significance information from a base layer;
FIG. 11A is a block diagram of a decoder according to an exemplary embodiment of the present invention;
FIG. 11B is a block diagram of the motion information reconstruction module shown in FIG. 11A;
FIG. 12A schematically shows the overall format of a bitstream;
FIG. 12B shows the detailed structure of each group of pictures (GOP) field shown in FIG. 12A; and
FIG. 12C shows the detailed structure of the MV field shown in FIG. 12B.

Exemplary embodiments of the present invention will now be described more fully with reference to the accompanying drawings, in which exemplary embodiments of the invention are shown. Aspects of the present invention and methods of accomplishing the same may be understood more readily by reference to the following detailed description of exemplary embodiments and the accompanying drawings. The present invention may, however, be embodied in many different forms and should not be construed as being limited to the exemplary embodiments set forth herein. Rather, these exemplary embodiments are provided so that this disclosure will be thorough and complete and will fully convey the concept of the invention to those skilled in the art, and the present invention will only be defuled by the appended claims. Like reference numerals refer to like elements throughout the specification.

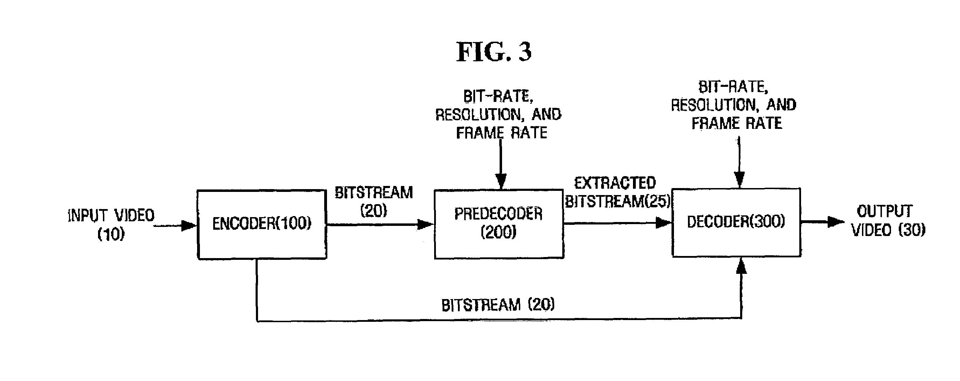

FIG. 3 shows the overall structure of a video/ image coding system. Referring to FIG. 3, a video/image coding system includes an encoder 100, a predecoder 200, and a decoder 300. The encoder 100 encodes an input video/image into a bitstream 20. The predecoder 200 truncates the bitstream 20 received from the encoder 100 and extracts various bitstreams 25 according to extraction conditions such as bit rate, resolution or frame rate determined considering environment of communication with and performance of the decoder 300.

The decoder 300 receives the extracted bitstream 25 and generates an output video/image 30. Of course, either the decoder 300 or the predecoder 200, or both of them may extract the bitstream 25 according to the extraction conditions instead of the predecoder 200.

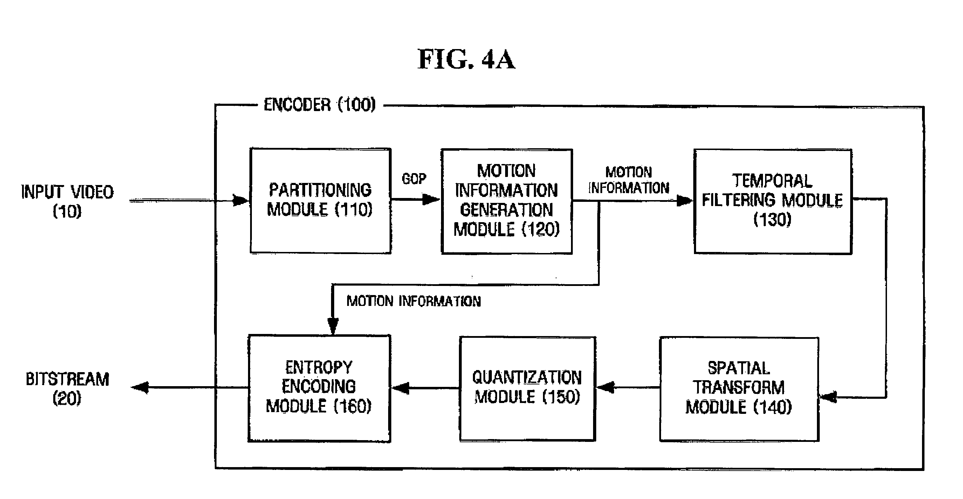

FIG. 4A is a block diagram of an encoder 100 in a video coding system. The encoder 100 includes a partitioning module 110, a motion information generation module 120, a temporal filtering module 130, a spatial transform module 140, a quantization module 150, and an entropy encoding module 160.

The partitioning module 110 divides an input video 10 into several groups of pictures (GOPs), each of which is independently encoded as a unit.

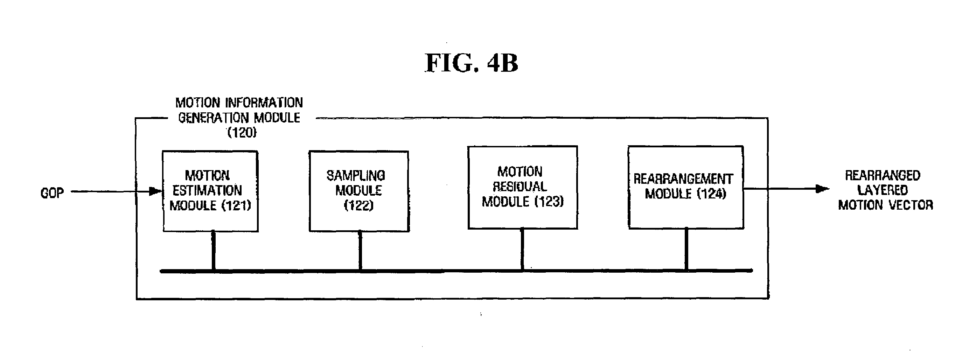

The motion information generation module 120 extracts an input GOP, performs motion estimation on frames in the GOP in order to determine motion vectors, and reorders the motion vectors according to their relative significance. Referring to FIG. 4B, the motion information generation module 120 includes a motion estimation module 121, a sampling module 122, a motion residual module 123, and a rearrangement module 124.

The motion estimation module 121 searches for a variable block size and a motion vector that minimizes a cost function in each layer according to predetermined pixel accuracy.

The sampling module 122 upsamples an original frame by a predetermined filter when the pixel accuracy is less than a pixel size, and downsamples the original frame into a low resolution before searching for a motion vector in a layer having a lower resolution than the original frame.

The motion residual module 123 calculates and stores a residual between motion vectors found in the respective layers.

The rearrangement module 124 reorders motion information on the current layer using significance information from lower layers.

The operation of the motion information generation module 120 will now be described. Preferred embodiments of the present invention use a method for supporting motion vector scalability by generating a motion vector consisting of multiple layers as described with reference to FIGS. 1 and 2. In one mode, motion vector sociability is implemented independently of spatial scalability by generating motion vectors consisting of multiple layers for frames having the same resolution (a "first exemplary embodiment") according to the accuracy of motion vector search. In another mode, motion vector sca.lability is implemented through interaction with spatial scalability, i.e., by increasing the accuracy of motion vector search with increasing resolution (a "second exemplary embodiment").

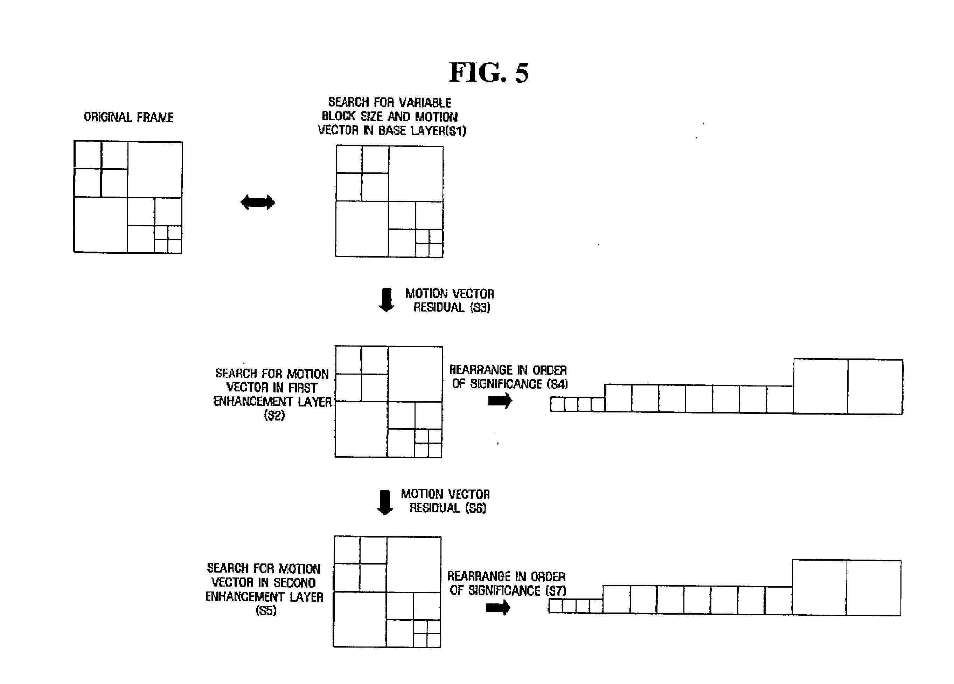

The first embodiment of the present invention will now be described with reference to FIG. 5. Referring to FIG. 5, an original frame is partitioned into a base layer and first and second enhancement layers that respectively use 1/2, 1/4, and 1/8 pixel accuracies. This is provided as an example only, and it will be readily apparent to those skilled in the art that the number of these layers or pixel accuracies may vary.

First, in operation S1, a motion vector search is performed at 1/2 pixel accuracy to find a variable block size and a motion vector in the base layer from an original frame.

In general, to accomplish a motion vector search, the current image frame is partitioned into macroblocks of a predetermined size, i.e., 16x16 pixels, and a macroblock in the reference image frame is compared with a corresponding macroblock in the current image frame pixel by pixel according to predetermined pixel accuracy in order to derive the difference (error) between the two macroblocks. A vector that offers the minimum sum of errors is designated as a motion vector for a macroblock in the current image frame. A search range may be predefined using parameters. A smaller range search reduces search time and exhibits good performance when the motion vector exists within the search range. However, the accuracy of prediction will be decreased for a fast-motion image since a motion vector may not exist within the range. Thus, the search range is selected properly according to the properties of an image. Since the motion vector in the base layer affects the accuracy and efficiency of a motion vector search for other layers, a full area search is desirable.

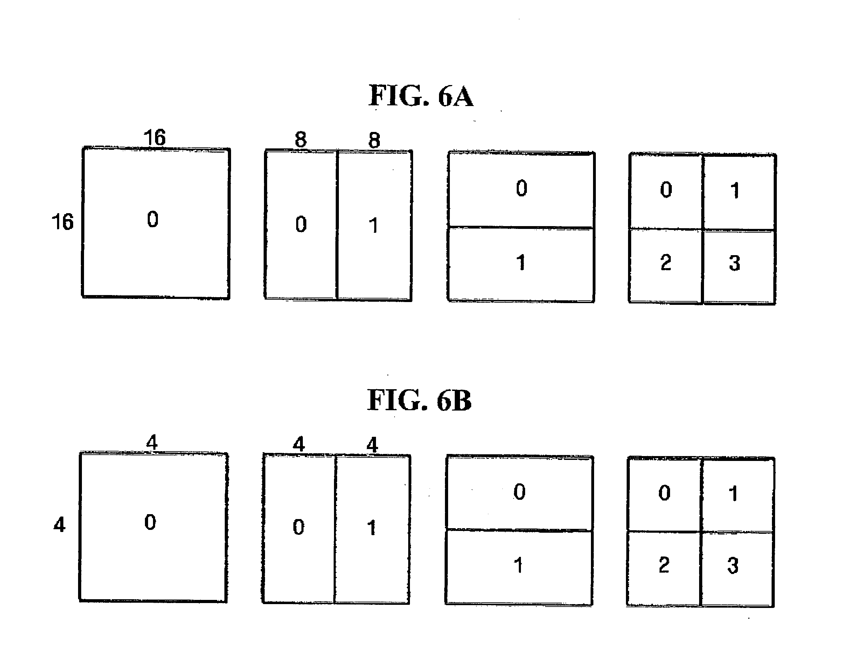

Motion estimation may be performed using variable size blocks instead of the above fixed-size block. This method is also performed on a block-by-block basis (e.g., 16x16 pixel block). As shown in FIG. 6A, a macroblock is divided into four sub-macroblocks, i.e., 16x16, 16x8, 8x16, and 8x8 blocks. As shown in FIG. 6B, an 8x8 sub-macroblock can be further fragment into smaller blocks, i.e., 8x8, 8x4, 4x8, and, 4x4 blocks.

To determine the optimal block size for motion estimation among the macroblock and the sub-macroblocks, a cost function J defined by Equation (1) is used:

$$J = D + \lambda \times R \qquad \text{Equation (1)}$$

where D is the number of bits used for coding a frame difference, R is the number of bits used for coding an estimated motion vector, and $\lambda$ is a Lagrangian multiplier. However, when performing temporal filtering such as Motion Compensated Temporal Filtering (MCTF) or unconstrained MCTF (UMCTF), energy in a temporal low-pass frame increases as a temporal level becomes higher. Thus, to maintain a constant rate-distortion relationship while increasing the temporal level, the value of Lagrangian multiplier λ must be increased as well. For example, the value of Lagrangian multiplier A increases by the square root of 2 (√2) with the temporal level.

The optimal block size for motion estimation on a certain region using the cost function is determined among 16x16, 16x8, 8x16, 8x8, 8x4, 4x8, and 4x4 blocks to minimize the cost function.

In practice, the optimal block size and motion vector component associated with the block size are not determined separately but together to minimize the cost function.

The motion vector search is done at predetermined pixel accuracy. While one pixel accuracy search requires no additional process, 1/2, 1/4, and 1/8 pixel accuracy search with a stepsize less than one pixel require the original frame to be upsampled by factors of 2, 4, and 8, respectively, before performing search one pixel by one pixel.

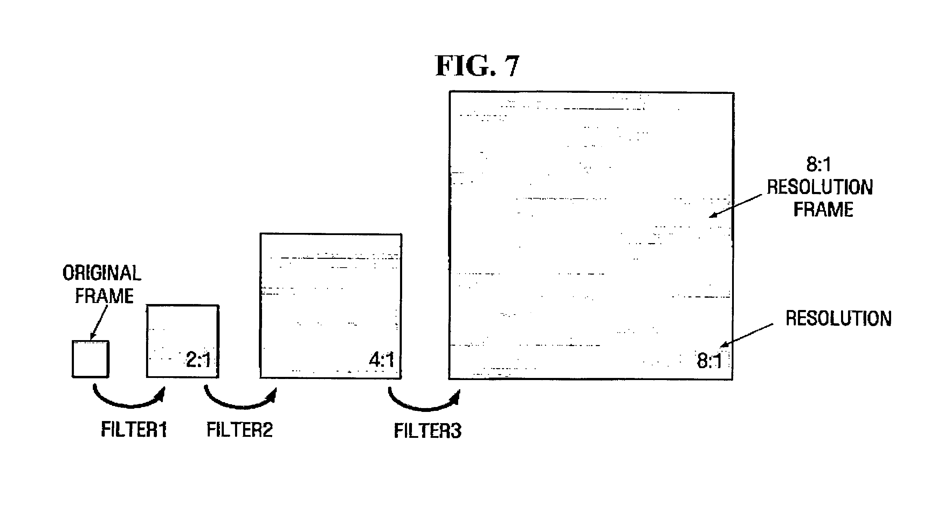

FIG. 7 illustrates an interpolation process for motion vector search with 1/8 pixel accuracy. For the 1/8 pixel motion vector search, the original frame must be upsampled by a factor of 8 (ratio of 8:1). The original frame is upsampled to a 2:1 resolution frame using filter 1, the 2:1 resolution frame to a 4:1 resolution frame using filter 2, and the 4: 1 resolution frame to an 8:1 resolution frame using filter 3. The three filters may be identical or different.

Referring back to FIG. 5, after obtaining the optimal variable block size and the motion vector for the base layer in the operation S1, a motion vector search is performed to a motion vector for the first enhancement layer in operation S2. Using the motion vector found in the base layer as the starting point, the motion vector search is performed within a search area around the same position, thus significantly reducing computational load compared to the full area search in the base layer.

In the first embodiment, since the spatial resolution of the base layer is the same as those of the first and second enhancement layers, the variable block size found from the motion vector search in the base layer can also be used for the motion vector search in the enhancement layers. However, as the cost function changes with pixel accuracy, a variable block size may vary, Thus, if the encoder 100 supports sufficient processing power, the better result may be obtained by searching for a new variable block size. In the illustrative embodiment, the variable block size found for the base layer is used for the motion vector search in the enhancement layers.

In operation S3, a residual (difference) between a motion vector in the base layer and a motion vector in the first enhancement layer is calculated. By storing only residuals using base layer motion vectors in the first enhancement layer, the amount of data needed to store motion vectors can be reduced.

In operation S4, the residuals between motion vectors are rearranged in order of significance of the motion vectors. By placing motion vectors whose truncation slightly affects the image quality at the end., it is possible to achieve scalability within a single layer.

Various kinds of information can be used to determine significance of the motion vectors. The information can be absolute values of motion vector coefficients, size of motion blocks in variable block size motion search, or the combination of both. When the combination of both criteria can be used as significance information, motion vectors are arranged in order of motion block sizes (first criterion) except for motion vectors for the same block size that are arranged in order of their magnitudes (second criterion), or vice versa.

A large motion vector coefficient represents many motions. Motion vectors are rearranged in order from the largest to smallest motions and a bitstream is sequentially truncated in order from smallest to largest motions, thereby efficiently improving scalability for motion vectors.

A small variable block size is often used in complex and rapidly changing motion areas while a large variable block size is used in monotonous and uniform motion areas such as a. background picture. Thus, a motion vector for a smaller block size may be considered to have higher significance.

This significance information can be obtained through motion information from a lower layer. The first enhancement layer can determine how to arrange the motion vector residuals by obtaining motion information from the base layer. The second enhancement layer needs to obtain motion information from the base layer and the first enhancement layer since only residuals can be stored in the first enhancement layer. That is, motion vectors for the first enhancement layer can be identified through motion information from the base layer.

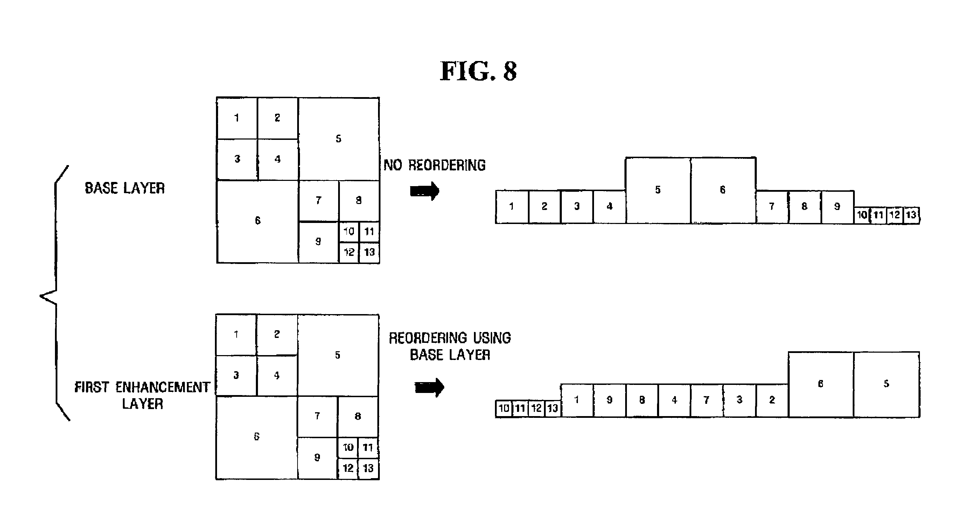

FIG. 8 shows an example of a process for obtaining significance information from the base layer. Referring to FIG. 8, motion vectors for the base layer are arranged in the order indicated by the numbers and then encoded without reordering. Motion information for the base layer cannot be reordered due to the absence of lower layers to be referenced in obtaining significance information. However, motion vectors in the base layer do not have to have scalability because the entire motion or texture information for the base layer is delivered to the decoder (300 of FIG. 3).

Motion vector residuals in the first enhancement layer arc rearranged using significance information from the base layer. Then, the predecoder (200 of FIG. 3) truncates from motion vectors at the end, thereby achieving scalability within the first enhancement layer.

Storing the order that the motion vector residuals are rearranged separately in the first enhancement layer for transmission to the decoder 300 may incur extra overhead instead of achieving scalability. However, the present embodiment only determines significance based on a specific criterion and does not require the reordering information to be recorded in a separate space because the significance information can be identified by data from a lower layer.

For example, when significance is determined by the magnitude of a motion vector, motion vector residuals for a corresponding block in the first enhancement layer may be rearranged in order of magnitudes of motion vectors from the base layer. The decoder 300 also decides how to arrange the motion vector residuals for the first enhancement layer in reverse order from the magnitude of motion vectors in the base layer without separate ordering information.

Turning to FIG. 5, in operation S5, a motion vector search is performed to find a motion vector for the second enhancement layer. Then, in operation S6, a residual is calculated between the searched motion vector and the motion vector for the first enhancement layer corresponding to the sum of a motion vector for the base layer and a motion vector residual for the first enhancement layer. Lastly, in operation S7, the obtained residuals are rearranged in order of significance from the lower layers.

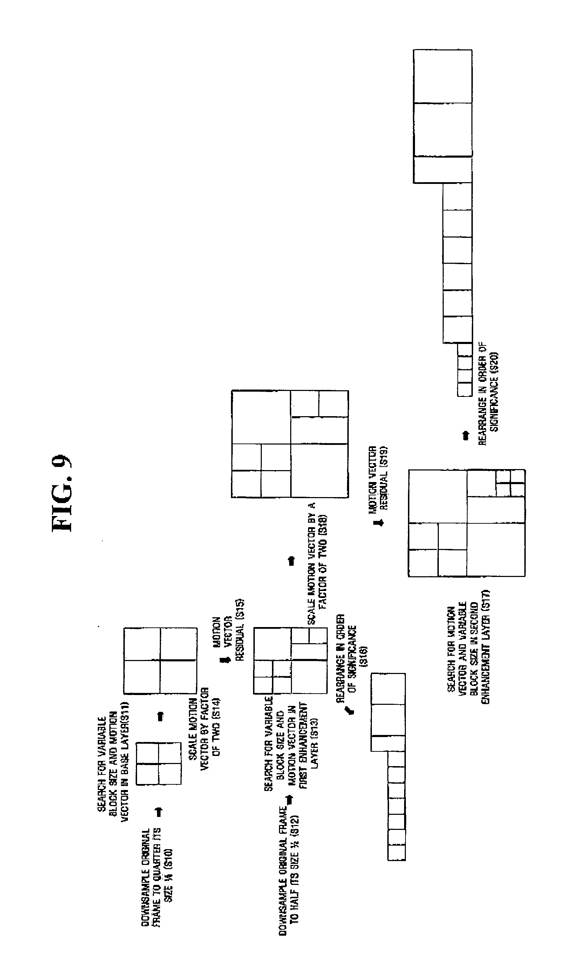

FIG. 9 is a diagram for explaining a method for implementing scalability for motion vector within a layer according to a second exemplary embodiment of the present invention when base layer and first and second enhancement layers have different resolutions. Here, an original frame is divided into the base layer and the first and second enhancement layers, and each layer has twice resolution and pixel accuracy than the immediately lower layer.

In operation S10, since the second enhancement layer has an original frame size, the original frame is downsampled to quarter its size in the base layer. In operation S11, a motion vector search is performed to find a variable block size and a motion vector for the base layer.

In operation S12, the original frame is downsampled to half its size in the first enhancement layer, followed by a motion vector search to find a variable block size and a motion vector for the first enhancement layer in operation S13. Unlike in the first embodiment, a separate variable block size needs to be determined for the first enhancement layer since the first enhancement layer has a different resolution than the base layer.

In operation S14, before calculating motion vector residuals for the first enhancement layer, the motion vectors found in the base layer are scaled by a factor of two to make the scales of the motion vectors in the base layer and the first enhancement layer equal. In operation S 15, a residual is calculated between the motion vector for the first enhancement layer and the scaled motion vector for the base layer.

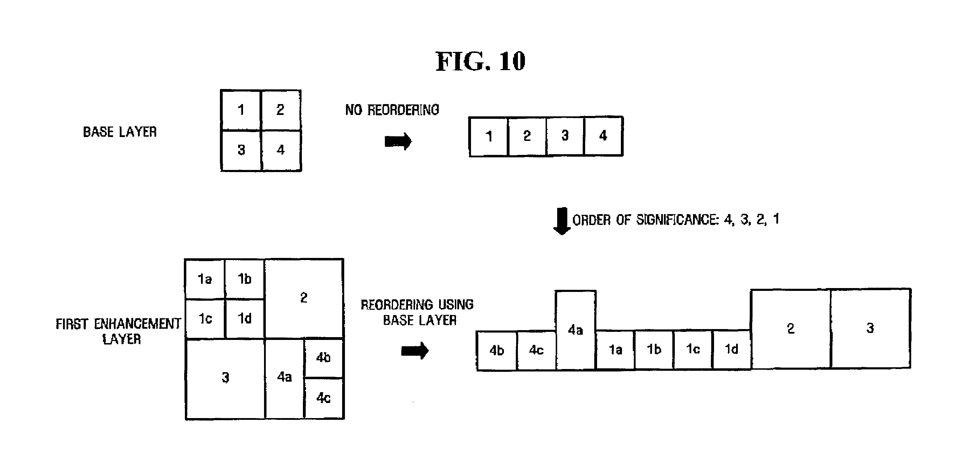

In operation S16, the residuals are rearranged in order of significance obta.ined from motion information for the base layer. FIG. 10 illustrates operation S16. For the base layer having one quarter of the original frame, motion information is arranged in a predetermined order without reordering. On the other hand, for the first enhancement layer, motion information is rearranged in order of significance obtained from the base layer. However, since the shape or number of variable size blocks varies from layer to layer, significance information for all blocks in the second enhancement layer may not be obtained from the base layer.

Information from the base layer disables significance levels of blocks 1a through 1d and blocks 4a through 4c in FIG. 10 to be discriminated from one another. In this case, motion vectors for those blocks are deemed to have the same priority and can be arranged randomly.

In addition, even if motion vectors are arranged in a random order in the first enhancement layer, the motion vectors can be rearranged in a specific order using variable block sizes for the first enhancement layer. For example, as shown in FIG. 10, the largest one 4c among the blocks 4a through 4c is assigned the lower priority than the remaining blocks 4a and 4b.

Referring to FIG. 4A, to reduce temporal redundancies, the temporal filtering module 130 uses motion vectors obtained by the motion estimation module 121 to decompose frames into low-pass and high-pass frames in direction of a temporal axis. As a temporal filtering algorithm, MCTF or UMCTF can be used.

The spatial transform module 140 removes spatial redundancies from the frames from which the temporal redundancies have been removed by the temporal filtering module 130 using discrete cosine transform (DCT) transform or wavelet transform and creates transform coefficients.

The quantization module 154 performs quantization on the transform coefficients obtained by the spatial transform module 140. Quantization is the process of converting real transform coefficients into discrete values by truncating a decimal number. In particular, when a wavelet transform is used for spatial transformation, embedded quantization is often used. Examples of the embedded quantization include Embedded Zerotrees Wavelet Algorithm (EZW), Set Partitioning in Hierarchical Trees (SPIHT), Embedded ZeroBlock Coding (EZBC), and so on.

The entropy encoding module 160 losslessly encodes the transform coefficients quantized by the quantization module 154 and the motion information generated by the motion information generation module 120 into a bitstream 20.

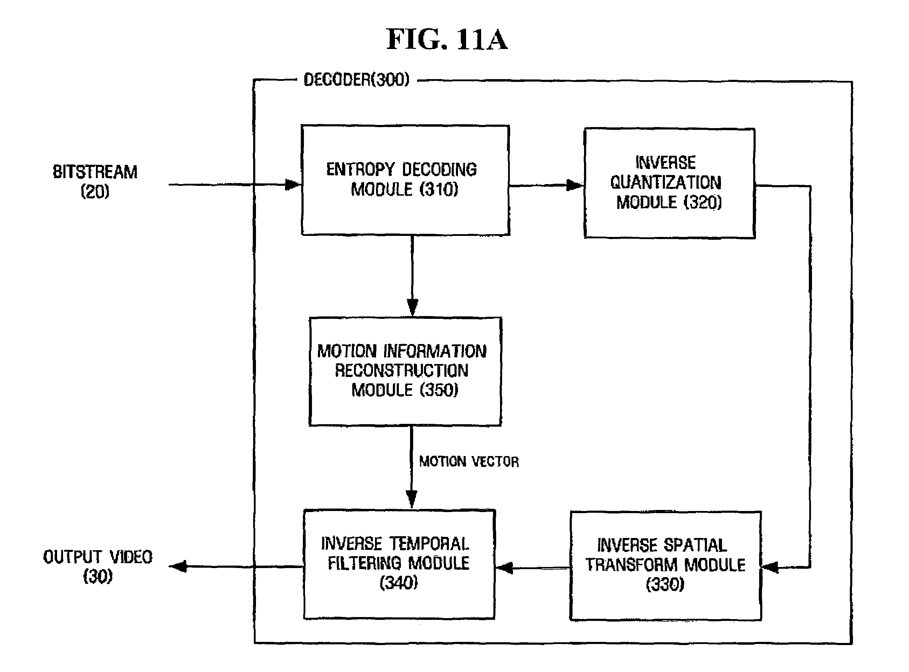

FIG. 11A is a block diagram of a decoder 300 in a video coding system according to an exemplary embodiment of the present invention.

The decoder 300 includes an entropy decoding module 310, an inverse quantization module 320, an inverse spatial transform module 330, an inverse temporal filtering module 340, and a motion information reconstruction module 350.

The entropy decoding module 310 that performs the reverse operation to the entropy encoding module (160 of FIG. 4A) interprets an input bitstream 20 and extracts texture information (encoded frame data) and motion information from the bitstream 20.

The motion information reconstruction module 350 receives the motion information from the entropy decoding module 310, finds significance using motion information from a lower layer among the motion information, and reversely arranges motion vectors for the current layer in the original order by referencing the significance. This is the process of converting a form rearranged for supporting motion vector scalability back into the original form.

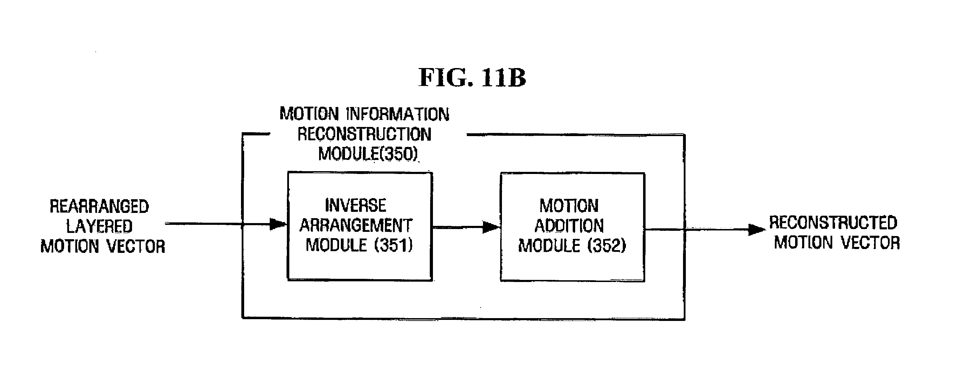

The operation of the motion information reconstruction module 350 will now be described in more detail with reference to FIG. 11B. Referring to FIG. 11B, the motion information reconstruction module 350 includes an inverse arrangement module 351 and a motion addition module 352.

The inverse arrangement module 350 reversely arranges motion information received from the entropy decoding module 310 in the original order using the predetermined significance.

The decoder 300 does not require any separate information for the inverse arrangement, in addition to information already received from the base layer and the enhancement layers.

The significance can be predetermined among various significance criteria by recording in a portion ("significance type field") of a reserved field information on significance according to which motion information will be rearranged for transmission to the decoder 300. For example, if the significance type field is set to "00", "01", and "02", respectively, these may mean that the significance is determined based on the absolute magnitudes of motion vectors, variable block sizes, and the combination of both (the former and the latter are the first and second criteria), respectively.

For example, if significance is determined by the magnitudes of motion vectors, motion information in the base layer are arranged in order of motion vector magnitudes: 2.48, 1.54, 4.24, and 3.92. Since motion vector residuals for the first enhancement layer are arranged in order of the current significance, these residuals need to be arranged in order of the magnitudes of the motion vectors in the base layer. That is, when the motion vector residuals read from the bitstream are arranged in order of a, b, c, and d with magnitudes of 4.24 3.92, 2.48, and 1.54, respectively, the residuals should be arranged in the original order c, d, a, and b that the motion vectors for the base layer is arranged.

In order to reconstruct motion vectors for the current layer, the motion addition module 352 obtains motion residuals from the motion information inversely arranged in the original order and adds each of the motion residuals to a motion vector from a lower layer.

The inverse quantization module 320 performs inverse quantization on the extracted texture information and outputs transform coefficients. No inverse quantization may be required depending on a quantization scheme chosen. While choosing embedded quantization requires inverse embedded quantization, the decoder 300 may not include the inverse quantization module 320 for other typical quantization methods.

The inverse spatial transform module 330 that performs inverse of operations of the spatial transform module (140 of FIG. 4A) inversely transforms the transform coefficients into transform coefficients in a spatial domain. For example, for DCT transform, the transform coefficients are inversely transformed from the frequency domain to the spatial domain. For the wavelet transform, the transform coefficients are inversely transformed from the wavelet domain to the spatial domain.

The inverse temporal filtering module 340 performs inverse temporal filtering on the transform coefficients in the spatial domain, i.e., a temporal residual image created by the inverse spatial transform module 340 using the reconstructed motion vectors output from the motion information reconstruction module 350 in order to reconstruct frames making up a video sequence.

The term 'module', as used herein, means, but is not limited to, a software or hardware component, such as a Field Programmable Gate Array (FPGA) or Application Specific Integrated Circuit (ASIC), which performs certain tasks. A module may advantageously be configured to reside on the addressable storage medium and configured to execute on one or more processors. Thus, a module may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided for in the components and modules may be combined into fewer components and modules or further separated into additional components and modules. In addition, the components and modules may be implemented such that they execute one or more computers in a communication system.

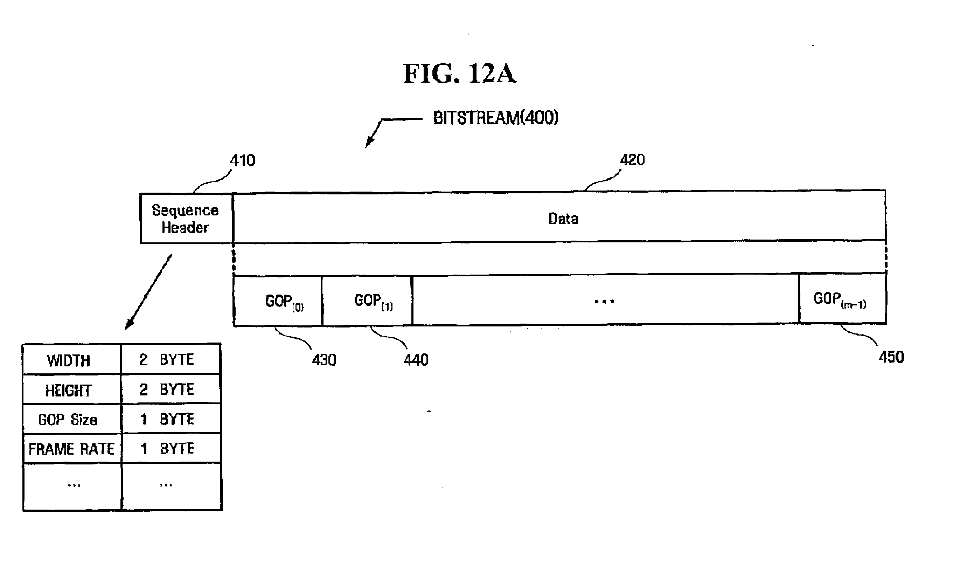

FIGS. 12A through 12C illustrate a structure of a bitstream 400 according to an exemplary embodiment of the present invention, in which FIG. 12A shows the overall format of the bitstream 400.

Referring to FIG. 12A, the bitstream 400 consists of a sequence header field 410 and a data field 420 containing at lest one GOP field 430 through 450.

The sequence header field 410 specifies image properties such as frame width (2 bytes) and height (2 bytes), a GOP size (1 byte), and a frame rate (1 byte). The data field 420 specifics overall image information and other information (motion vector, reference frame number) needed to reconstruct images.

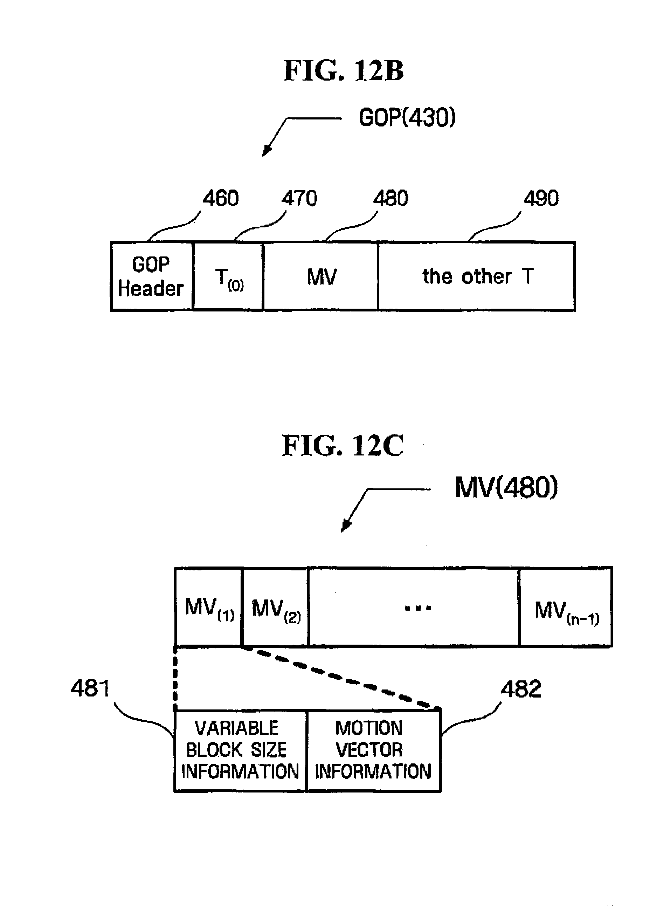

FIG. 12B shows the detailed structure of each GOP field 430. Referring to FIG. 12B, the GOP field 430 consists of a GOP header 460, a $T_{(0)}$ field 470 specifying information on a first frame (encoded without reference to another frame ) subjected to temporal filtering, a MV field 480 specifying a set of motion vectors, and a 'the other T' field 490 specifying information on frames (encoded with reference to another frame) other than the first frame. Unlike the sequence header field 410 specifying properties of the entire video sequence, the GOP header field 460 specifies image properties on a GOP such as temporal filtering order or temporal levels associated with the GOP.

FIG. 12C shows the detailed structure of the MV field 480 consisting of $MV_{(1)}$ through $MV_{(n-1)}$ fields.

Each of the $MV_{(1)}$ through $MV_{(n-1)}$ fields specifies a pair of information on each variable size block such as size and position and motion vector information. The order that information is recorded in the $MV_{(1)}$ through $MV_{(n-1)}$ fields is determined according to 'significance' proposed in the present invention. If the predecoder (200 of FIG. 3) or the decoder (300 of FIG. 3) intends to support motion scalability, the MV field 480 may be truncated from the end as needed. That is, motion scalability can be achieved by truncating from less motion important information.

While preferred embodiments of the present invention have been particularly shown and described with reference to exemplary embodiments thereof, it will be understood by those of ordinary skill in the art that various changes in form and details may be made therein without departing from the spirit and scope of the present invention as defined by the following claims.

Preferred embodiments of the present invention achieve true motion vector scalabilty, thereby providing a user with a bitstream containing an appropriate number of bits to adapt to a changing network situation.

Preferred embodiments of the present invention can also adjust the amounts of motion information and texture information in a complementary manner by increasing/decreasing them as needed according to environment's specific needs, thereby improving image quality.

Attention is directed to all papers and documents which are filed concurrently with or previous to this specification in connection with this application and which are open to public inspection with this specification, and the contents of all such papers and documents arc incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

1. A motion estimation apparatus (120) comprising:

   a motion estimation module (121) which searches for a variable block size and a. motion vector that minimize a cost function J for each layer of a plurality of layers according to predetermined pixel accuracy;
   a motion residual module (123) which calculates a residual between motion vectors which are found in respective layers; and
   a rearrangement module (124) which rearranges residuals between motion vectors which arc found and variable block size information which is found using a significance obtained from a lower layer which is searched.

2. The apparatus of claim 1, wherein the cost function J is calculated using equation $J = D + \lambda \times R$ where D is the number of bits used for coding a frame difference, R is a number of bits used for coding an estimated motion vector, and $\lambda$ is a Lagrangian control variable.

3. The apparatus of claim 1 or claim 2, wherein a frame is upsampled by interpolating between pixels using a predetermined filter.

4. The apparatus of any preceding claim, wherein the significance is determined by absolute values of motion vector coefficients for the lower layer.

5. The apparatus of any one of claims 1 to 3, wherein the significance is determined by a variable block size for the lower layer.

6. A video encoder (100) comprising:

   a motion information generation module (120) which performs motion estimation on frames in order to determine motion vectors and rearranges the motion vectors according to their significance;
   a temporal filtering module (130) which reduces temporal redundancies by decomposing the frames into low-pass frames and high-pass frames in a direction of a temporal axis using the motion vectors;
   a spatial transform module (140) which removes spatial redundancies from the frames from which the temporal redundancies have been removed by the temporal filtering module (130) and creates transform coefficients;

a quantization module (150) which quantizes the transform coefficients; and

an entropy encoding module (160) which losslessly encodes the transform coefficients which are quantized and the motion vectors which are rearranged.

7. The video encoder of claim 6, wherein the spatial transform is performed using discrete cosine transform (DCT) or wavelet transform.

8. The video encoder of claim 6 or claim 7, wherein the motion information generation module (120) comprises:

a motion estimation module (121) which searches for a variable block size and motion vectors that minimize a cost function J according to predetermined pixel accuracy; and

a rearrangement module (124) which rearranges the motion vectors and variable block size information according to their significance.

9. The video encoder of any one of claims 6-8, wherein the motion information generation module (120) comprises:

a motion estimation module (121) which searches for a variable block size and a motion vector from the frames, that minimize a cost function J for each layer of a plurality of layers according to predetermined pixel accuracy;

a motion residual module (123) which calculates a residual between motion vectors which are found in respective layers; and

a rearrangement module (124) which rearranges residuals between the motion vectors which are found and variable block size information which is found using a significance obtained from a lower layer which is searched.

10. The video encoder of claim 9, wherein the significance is determined by absolute values of motion vector coefficients for the lower layer.

11. The video encoder of claim. 9, wherein the significance is determined by a variable block size for the lower layer.

12. A video decoder (130) comprising:

an entropy decoding module (310) which interprets a bitstream and extracts texture information and motion information from the bitstream;

a motion information reconstruction module (350) which finds significance using motion information from a lower layer among the motion information and reversely arranges motion vectors for a current layer in an original order by referencing the significance;

an inverse spatial transform module (330) which performs an inverse spatial transform in order to inversely transform coefficients contained in the texture information into transform coefficients in a spatial domain; and

an inverse temporal filtering module (340) which performs inverse temporal filtering on the transform coefficients in the spatial domain using the motion vectors which are reversely arranged and reconstructs frames which comprise a video sequence.

13. The decoder of claim 12, further comprising an inverse quantization module (320) inversely quantizing the transform coefficients before performing the inverse spatial transform.

14. The decoder of claim 12 or claim 13, wherein the motion information reconstruction module (350) comprises:

an inverse arrangement module (351) which reversely arranges motion information received from the entropy decoding module (310) in the original order using a significance which is predetermined in a coding scheme; and

a motion addition module (352) which obtains motion residuals from the motion information which is reversely arranged and adding each of the motion residuals to a motion vector from a lower layer.

15. The decoder of claim 14, wherein the significance is predetermined among a plurality of significance criteria by recording information on significance according to which motion information will be rearranged in a portion of the bitstream for transmission to the decoder.

16. A motion estimation method comprising:

obtaining a variable block size and a motion vector for a base layer from an original frame;

obtaining a motion vector for a first enhancement layer;

calculating a residual between the motion vector for the base layer and the motion vector for the first enhancement layer; and

rearranging the motion vector residuals in order of significance of the motion vectors.

17. The motion estimation method of claim 16, further comprising:

> searching for a motion vector in a second enhancement layer;
>
> calculating a residual between the searched motion vector and a sum of the motion vector for the base layer and the motion vector residual for the first enhancement layer; and
>
> rearranging the residuals according to significance obtained from a lower layer.

**18.** The motion estimation method of claim 16 or claim 17, wherein the variable block size and the motion vector are determined that minimizes a cost function J which is calculated using equation $J = D + \lambda \times R$, where D is the number of bits used for coding a frame difference, R is the number of bits used for coding an estimated motion vector, and $\lambda$ is a Lagrangian control variable.

**19.** The motion estimation method of any one of claims 16-18, wherein the significance is determined by absolute values of motion vector coefficients for a lower layer.

**20.** The motion estimation method of any one of claims 16-18, wherein the significance is determined by a variable block size for a lower layer.

**21.** A motion estimation method comprising:

> performing first downsampling of an original frame to a resolution of a base layer;
>
> performing a search on a frame obtained with the first downsampling to find a variable block size and a motion vector for the base layer;
>
> performing second downsampling of an original :frame to be a resolution of a first enhancement layer;
>
> performing a search on a frame obtained with the second downsampling to find a variable block size and a motion vector for the first enhancement layer;
>
> scaling the motion vector found in the base layer by a scale factor corresponding to a multiple of a resolution of the first enhancement layer to that of the base layer in order to make scales of the motion vectors in the base layer and the first enhancement layer equal;
>
> calculating a residual between the motion vector for the first enhancement layer and the motion vector for the base layer which is scaled; and
>
> rearranging residuals in order of significance which is obtained from motion information contained in the base layer.

**22.** A video encoding method comprising:

> performing motion estimation on frames in a group of pictures (GOP) in order to determine motion vectors and rearranging the motion vectors;
>
> reducing temporal redundancies from the frames using the motion vectors;
>
> removing spatial redundancies from the frames from which the temporal redundancies have been removed; and
>
> quantizing transform coefficients created by removing the spatial redundancies and the motion vectors which are rearranged.

**23.** The video encoding method of claim 22, wherein the motion vectors are rearranged according to significance of frame blocks represented by respective motion vectors.

**24.** The video encoding method of claim 22 or claim 23, wherein the removing of the spatial redundancies includes performing Discrete Cosine Transform (DCT) or wavelet transform.

**25.** The video encoding method of claim 23, further comprising losslessly encoding the transform coefficients which are quantized and generated motion information into a bitstream.

**26.** The video encoding method of claim 23, wherein the determining and rearranging of the motion vectors comprises:

> searching for a variable block size and a motion vector in a. base layer from an original frame;
>
> searching for a motion vector in a first enhancement layer;
>
> calculating a residual between the motion vector for the base layer and the motion vector for the first enhancement layer; and
>
> rearranging motion vector residuals in order of significance of the motion vectors.

**27.** The video encoding method of claim 23, wherein the significance is determined by absolute values of motion vector coefficients for a lower layer.

**28.** The video encoding method of claim 23, wherein the significance is determined by a variable block size for a lower layer.

**29.** A video decoding method comprising:

> interpreting an input bitstream and extracting texture information and motion information from the bitstream;
>
> reversely arranging motion vectors contained in the motion information in an original order; and

performing inverse spatial transform on transform coefficients contained in the texture information and performing inverse temporal filtering on the transform coefficients using the motion vectors.

30. The video decoding method of claim 29, further comprising inversely quantizing the transform coefficients before performing inverse spatial transform.

31. The video decoding method of claim 29 or claim 30, wherein the reversely arranging of the motion vectors comprises:

reversely arranging the motion information in the original order using a predetermined significance; and
reconstructing motion vectors for a current layer by obtaining motion residuals from the motion information which is reversely arranged in the original order and adding each of the motion residuals to a motion vector from a lower layer.

32. The video decoding method of any one of claims 29-31, wherein the significance is predetermined among a plurality of significance criteria by recording information on significance according to which motion information will be rearranged in a portion of the bitstream for transmission to a decoder.

# FIG. 1

ORIGINAL
MOTION VECTOR

16x16

MOTION VECTOR
LAYER

(1)

BASE LAYER

(11)  (12)
(13)  (14)

FIRST
ENHANCMENT
LAYER

(111)  (112)  (121)

(141)  (142)
(A)
(131)  (143)  (144)

SECOND
ENHANCEMENT
LAYER

# FIG. 2

FIRST ENHANCEMENT LAYER

## FIG. 3

INPUT VIDEO (10) → ENCODER(100)

BITSTREAM (20)

BIT-RATE, RESOLUTION, AND FRAME RATE → PREDECODER (200)

EXTRACTED BITSTREAM(25)

BIT-RATE, RESOLUTION, AND FRAME RATE → DECODER(300) → OUTPUT VIDEO (30)

BITSTREAM (20)

## FIG. 4A

ENCODER (100)

INPUT VIDEO (10) → PARTITIONING MODULE (110)

GOP → MOTION INFORMATION GENERATION MODULE (120)

MOTION INFORMATION → TEMPORAL FILTERING MODULE (130)

MOTION INFORMATION

BITSTREAM (20) ← ENTROPY ENCODING MODULE (160) ← QUANTIZATION MODULE (150) ← SPATIAL TRANSFORM MODULE (140)

EP 1 589 764 A2

# FIG. 4B

MOTION INFORMATION GENERATION MODULE (120)

GOP → MOTION ESTIMATION MODULE (121) → SAMPLING MODULE (122) → MOTION RESIDUAL MODULE (123) → REARRANGEMENT MODULE (124) → REARRANGED LAYERED MOTION VECTOR

EP 1 589 764 A2

# FIG. 5

ORIGINAL FRAME

SEARCH FOR VARIABLE
BLOCK SIZE AND MOTION
VECTOR IN BASE LAYER(S1)

MOTION VECTOR
RESIDUAL (S3)

SEARCH FOR MOTION
VECTOR IN FIRST
ENHANCEMENT LAYER
(S2)

REARRANGE IN ORDER
OF SIGNIFICANCE (S4)

MOTION VECTOR
RESIDUAL (S6)

SEARCH FOR MOTION
VECTOR IN SECOND
ENHANCEMENT LAYER
(S5)

REARRANGE IN ORDER
OF SIGNIFICANCE (S7)

EP 1 589 764 A2

## FIG. 6A

## FIG. 6B

FIG. 7

ORIGINAL
FRAME

2:1

4:1

8:1

8:1
RESOLUTION
FRAME

RESOLUTION

FILTER1    FILTER2         FILTER3

# FIG. 8

BASE LAYER

NO REORDERING

FIRST ENHANCEMENT LAYER

REORDERING USING BASE LAYER

EP 1 589 764 A2

# FIG. 9

SEARCH FOR VARIABLE BLOCK SIZE AND MOTION VECTOR IN BASE LAYER(S11)

DOWNSAMPLE ORIGINAL FRAME TO QUARTER ITS SIZE ¼ (S10)

SCALE MOTION VECTOR BY FACTOR OF TWO (S14)

MOTION VECTOR RESIDUAL (S15)

DOWNSAMPLE ORIGINAL FRAME TO HALF ITS SIZE ½ (S12)

SEARCH FOR VARIABLE BLOCK SIZE AND MOTION VECTOR IN FIRST ENHANCEMENT LAYER (S13)

SCALE MOTION VECTOR BY A FACTOR OF TWO (S18)

REARRANGE IN ORDER OF SIGNIFICANCE (S16)

MOTION VECTOR RESIDUAL (S19)

SEARCH FOR MOTION VECTOR AND VARIABLE BLOCK SIZE IN SECOND ENHANCEMENT LAYER (S17)

REARRANGE IN ORDER OF SIGNIFICANCE (S20)

EP 1 589 764 A2

# FIG. 10

BASE LAYER

NO REORDERING

ORDER OF SIGNIFICANCE: 4, 3, 2, 1

FIRST ENHANCEMENT LAYER

REORDERING USING BASE LAYER

# FIG. 11A

# FIG. 11B

MOTION INFORMATION RECONSTRUCTION MODULE(350)

REARRANGED LAYERED MOTION VECTOR → INVERSE ARRANGEMENT MODULE (351) → MOTION ADDITION MODULE (352) → RECONSTRUCTED MOTION VECTOR

EP 1 589 764 A2

# FIG. 12A

BITSTREAM(400)

410

420

| Sequence Header | Data |
|---|---|

| GOP(0) | GOP(1) | ... | GOP(m-1) |
|---|---|---|---|

430

440

450

| WIDTH | 2 BYTE |
|---|---|
| HEIGHT | 2 BYTE |
| GOP Size | 1 BYTE |
| FRAME RATE | 1 BYTE |
| ... | ... |

EP 1 589 764 A2

# FIG. 12B

GOP(430)

| 460 | 470 | 480 | 490 |
|---|---|---|---|
| GOP Header | $T_{(0)}$ | MV | the other T |

# FIG. 12C

MV(480)

| $MV_{(1)}$ | $MV_{(2)}$ | ... | $MV_{(n-1)}$ |
|---|---|---|---|

| 481 | 482 |
|---|---|
| VARIABLE BLOCK SIZE INFORMATION | MOTION VECTOR INFORMATION |